# EUROPEAN PATENT APPLICATION

(11) **EP 3 961 498 A1**
(43) Date of publication of application: **02.03.2022**
(21) Application number: 21777920.6
(22) Date of filing: 25.01.2021
(51) Int. Cl.: G06K 9/00

(54) **DANGEROUS DRIVING BEHAVIOR RECOGNITION METHOD AND APPARATUS, AND ELECTRONIC DEVICE AND STORAGE MEDIUM**

(30) Priority: 29.06.2020 CN 202010611370
(71) Applicant: Beijing Baidu Netcom Science and Technology Co., Ltd., Beijing 100085 (CN)
(72) Inventor: WANG, Keyao, Beijing 100085 (CN); FENG, Haocheng, Beijing 100085 (CN); YUE, Haixiao, Beijing 100085 (CN)
(74) Representative: Regimbeau
(86) International application number: PCT/CN2021/073483
(87) International publication number: WO 2022/001091

(57) **Abstract**

Provided are a method and apparatus for recognizing a dangerous driving behavior, an electronic device and a storage medium, which relate to the fields of artificial intelligence, deep learning and image recognition, and may be applied to the field of autonomous driving. The specific solution is described below. A to-be-recognized image is input to a pre-trained human face detection model, human face detection is performed on the to-be-recognized image through the pre-trained human face detection model, and a human face detection frame of the to-be-recognized image is obtained; and the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained. According to embodiments of the present disclosure, the accuracy of recognizing a dangerous driving behavior of a driver can be greatly improved, at the same time the calculation cost can be greatly reduced, and a capability of recognizing a dangerous driving behavior with high accuracy and in real time is obtained.

## Description

### TECHNICAL FIELD

The present disclosure relates to the technical field of computers, further relates to the fields of artificial intelligence, deep learning and image recognition, may be applied to the field of autonomous driving, and in particular relates to a method and apparatus for recognizing a dangerous driving behavior, an electronic device and a storage medium.

### BACKGROUND

With the continuous development of the Internet and artificial intelligence technologies, more and more fields have begun to involve automated calculation and analysis, among which the field of surveillance and security is one of the most important scenes.

For vehicles operated for the public such as taxis, buses and coaches who involve the safety of many passengers, the driving safety of drivers is particularly important. Therefore, many vehicles operated for the public have installed on-board surveillance cameras to facilitate the corresponding companies or supervision authorities to monitor drivers' driving behaviors. Some dangerous driving behaviors frequently occurring by drivers such as smoking, phoning and not wearing seat belts need to be discovered in time and warned off to ensure the driving safety of the vehicles to the greatest extent.

For judging whether drivers' seat belts are fastened, conventional methods generally perform spot checks on surveillance videos and then perform manual judgements with the human eye. In recent years, with the rise of convolutional neural networks (CNNs), some methods have introduced artificial intelligent auxiliary recognition, but these methods generally just perform direct binary classification on entire surveillance pictures or drivers' body regions to make judgments. In the existing solutions, the method of judging manually with the human eye has disadvantages such as slow speed, large error, and high time and labor cost. For the direction classification method based on CNNs, target actions such as smoking, phoning and drinking have relatively small movement ranges in images, and thus sparse features can be extracted; meanwhile, a lot of interference information exits around the features, resulting in relatively low recognition accuracy in real vehicle scenes, so that the recognition effect is not ideal.

### SUMMARY

The present disclosure provides a method and apparatus for recognizing a dangerous behavior, an electronic device and a storage medium, so that the accuracy of recognizing a dangerous driving behavior of a driver may be greatly improved, at the same time the calculation cost may be greatly reduced, and a capability of recognizing a dangerous driving behavior with high accuracy and in real time is obtained.

In a first aspect, the present disclosure provides a method for recognizing a dangerous behavior. The method includes steps described below.

A to-be-recognized image is input to a pre-trained human face detection model, human face detection is performed on the to-be-recognized image through the pre-trained human face detection model, and a human face detection frame of the to-be-recognized image is obtained. The human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained.

In a second aspect, the present disclosure provides an apparatus for recognizing a dangerous driving behavior. The apparatus includes: a human face detection module and a behavior recognition module.

The human face detection module is configured to input a to-be-recognized image to a pre-trained human face detection model, perform, through the pre-trained human face detection model, human face detection on the to-be-recognized image, and obtain a human face detection frame of the to-be-recognized image.

The behavior recognition module is configured to input the human face detection frame to a pre-trained dangerous driving behavior recognition model, perform, through the pre-trained dangerous driving behavior recognition model, dangerous driving behavior recognition on the human face detection frame, and obtain a dangerous driving behavior recognition result corresponding to the human face detection frame.

In a third aspect, an embodiment of the present disclosure provides an electronic device. The electronic device includes one or more processors and a memory.

The memory is configured to store one or more programs. The one or more programs are executed by the one or more processors to cause the one or more processors to implement the method for recognizing a dangerous driving behavior of any embodiment of the present disclosure.

In a fourth aspect, an embodiment of the present disclosure provides a storage medium storing a computer program. The program, when executed by a processor, implements the method for recognizing a dangerous driving behavior of any embodiment of the present disclosure. According to the technology of the present disclosure, the technical problem is solved that in the related art, a to-be-recognized image is directly recognized based on convolutional neural networks (CNNs), however, target actions such as smoking, phoning and drinking have relatively small movement ranges in images, and thus sparse features can be extracted; meanwhile, a lot of interference information exists around the feature, resulting in relatively low recognition accuracy in real vehicle scenes and not-ideal recognition effect. According to the technical solution of the present disclosure, the accuracy of recognizing a dangerous driving behavior of a driver can be greatly improved, at the same time the calculation cost can be greatly reduced, and a capability of recognizing a dangerous driving behavior with high accuracy and in real time is obtained.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1 is a flowchart of a method for recognizing a dangerous driving behavior according to embodiment one of the present disclosure;
FIG. 2 is a flowchart of a method for recognizing a dangerous driving behavior according to embodiment two of the present disclosure;
FIG. 3 is a flowchart of a method for recognizing a dangerous driving behavior according to embodiment three of the present disclosure;
FIG. 4 is a first structural diagram of an apparatus for recognizing a dangerous driving behavior according to embodiment four of the present disclosure;
FIG. 5 is a second structural diagram of an apparatus for recognizing a dangerous driving behavior according to embodiment four of the present disclosure;
FIG. 6 is a structural diagram of a preprocessing module according to embodiment four of the present disclosure; and
FIG. 7 is a block diagram of an electronic device for implementing a method for recognizing a dangerous driving behavior according to an embodiment of the present disclosure.

### DETAILED DESCRIPTION

Example embodiments of the present disclosure including details are described hereinafter in conjunction with the drawings to facilitate understanding. Those example embodiments are illustrative only. Therefore, it is to be understood by those of ordinary skill in the art that various changes and modifications may be made to the embodiments described herein without departing from the scope and spirit of the present disclosure. Similarly, description of well-known functions and constructions is omitted hereinafter for clarity and conciseness.

### Embodiment one

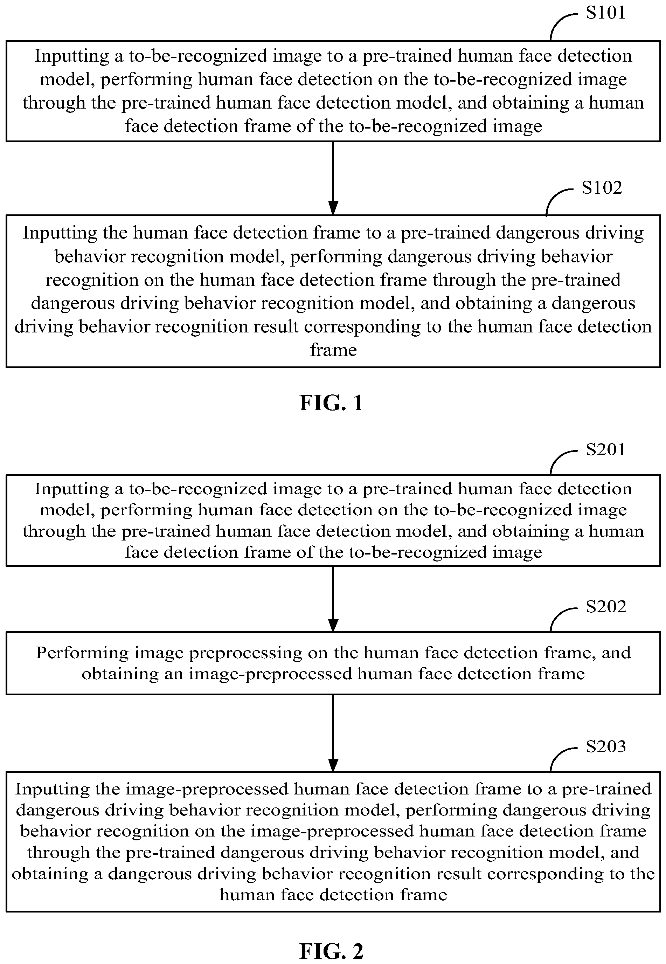

FIG. 1 is a flowchart of a method for recognizing a dangerous driving behavior according to embodiment one of the present disclosure. The method may be executed by an apparatus for recognizing a dangerous driving behavior or an electronic device. The apparatus or the electronic device may be implemented as software and/or hardware. The apparatus or the electronic device may be integrated in any smart device having a network communication function. As shown in FIG. 1, the method for recognizing a dangerous driving behavior may include steps described below.

In step S101, a to-be-recognized image is input to a pre-trained human face detection model, human face detection is performed on the to-be-recognized image through the pre-trained human face detection model, and a human face detection frame of the to-be-recognized image is obtained. In a specific embodiment of the present disclosure, an electronic device may input a to-be-recognized image to a pre-trained human face detection model, perform human face detection on the to-be-recognized image through the pre-trained human face detection model, and obtain a human face detection frame of the to-be-recognized image. Specifically, coordinates of four vertices of the human face detection frame may be obtained through the human face detection model, and the human face detection frame may be obtained based on the coordinates of these four vertices. In an embodiment, the electronic device may first configure a first layer of convolutional neural network of the pre-trained human face detection model as a current layer of convolutional neural network, and configure the to-be-recognized image as a detection object of the current layer of convolutional neural network; then perform, through the current layer of convolutional neural network, image downsampling on the detection object of the current layer of convolutional neural network, and obtain a human face feature extraction result corresponding to the current layer of convolutional neural network; the electronic device may further configure the human face feature extraction result corresponding to the current layer of convolutional neural network as a detection object of a next layer of convolutional neural network of the current layer of convolutional neural network; configure the next layer of convolutional neural network as the current layer of convolutional neural network, and repeat the above operations until a human face feature extraction result corresponding to an N-th layer of convolutional neural network is extracted from a detection object of the N-th layer of convolutional neural network of the pre-trained human face detection model, where N is a natural number greater than 1. Finally the electronic device is configured to obtain, according to human face feature extraction results corresponding to each layer of convolutional neural network among the first layer of convolutional neural network to the N-th layer of convolutional neural network, the human face detection frame of the to-be-recognized image. Specifically, the electronic device may perform image downsampling through six layers of convolutional neural networks of the human face detection model and obtain human face feature extraction results corresponding to the six layers of convolutional neural networks; a fixed number of human face anchor frames having different sizes are respectively preset based on the last three layers of convolutional neural networks to perform human face detection frame regression, and finally a human face detection result is obtained, that is, the coordinates of the four vertices of the face detection frame.

In step S102, the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained.

In a specific embodiment of the present disclosure, the electronic device may input the human face detection frame to a pre-trained dangerous driving behavior recognition model, perform dangerous driving behavior recognition on the human face detection frame through the pre-trained dangerous driving behavior recognition model, and obtain a dangerous driving behavior recognition result corresponding to the human face detection frame. In an embodiment, the electronic device may first input the human face detection frame to a convolutional layer in the pre-trained dangerous driving behavior recognition model, perform, through the convolutional layer, a convolution operation on the human face detection frame, and obtain a human face feature extraction result corresponding to the convolutional layer; then the electronic device may input the human face feature extraction result corresponding to the convolutional layer to a pooling layer in the pre-trained dangerous driving behavior recognition model, perform, through the pooling layer, a pooling operation on the human face detection frame corresponding to the convolutional layer, and obtain a human face feature extraction result corresponding to the pooling layer. Finally, the electronic device may input the human face feature extraction result corresponding to the pooling layer to a fully connected layer in the pre-trained dangerous driving behavior recognition model, perform, through the fully connected layer, a classification operation on the human face feature extraction result corresponding to the pooling layer, and obtain the dangerous driving behavior recognition result corresponding to the human face detection frame. Specifically, the electronic device may perform feature extraction on the human face detection frame through a dangerous driving behavior recognition model composed of eight convolutional layers and five pooling layers, and then output the dangerous driving behavior recognition result through the fully connected layer.

In a specific embodiment of the present disclosure, driving behaviors may be defined as five types which respectively are: a non-dangerous behavior, phoning, smoking, eating and drinking, and numbers 0 to 4 are used as tags of various driving behaviors

According to the method for recognizing a dangerous driving behavior provided by the embodiment of the present disclosure, a to-be-recognized image is input to a pre-trained human face detection model, human face detection is performed on the to-be-recognized image through the pre-trained human face detection model, and a human face detection frame of the to-be-recognized image is obtained; and the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained. That is to say, in the present disclosure, a human face detection frame may be first extracted from a to-be-recognized image, and then dangerous driving behavior recognition is performed based on the human face detection frame. In the related method for recognizing a dangerous driving behavior, a to-be-recognized image is directly recognized based on convolutional neural networks (CNNs). In the present disclosure, the technical means is adopted that a human face detection frame is first extracted from a to-be-recognized image and then dangerous driving behavior recognition is performed based on the human face detection frame, so that the technical problem is solved that in the related art, a to-be-recognized image is directly recognized based on CNNs, however, target actions such as smoking, phoning and drinking have relatively small movement ranges in images, and thus scarce features may be extracted; meanwhile, a lot of interference information exits around the features, resulting in relatively low recognition accuracy in real vehicle scenes and not-ideal recognition effect. According to the technical solution of the present disclosure, the accuracy of recognizing a dangerous driving behavior of a driver may be greatly improved, at the same time the calculation cost may be greatly reduced, and a capability of recognizing a dangerous driving behavior with high accuracy and in real time is obtained. Moreover, the technical solution of the embodiment of the present disclosure is simple and convenient to implement, easy to popularize, and has a wider application range.

### Embodiment two

FIG. 2 is a flowchart of a method for recognizing a dangerous driving behavior according to embodiment two of the present disclosure. As shown in FIG. 2, the method for recognizing a dangerous driving behavior may include steps described below.

In step S201, a to-be-recognized image is input to a pre-trained human face detection model, human face detection is performed on the to-be-recognized image through the pre-trained human face detection model, and a human face detection frame of the to-be-recognized image is obtained. In step S202, image preprocessing is performed on the human face detection frame, and an image-preprocessed human face detection frame is obtained.

In a specific embodiment of the present disclosure, an electronic device may perform image preprocessing on the human face detection frame and obtain an image-preprocessed human face detection frame; and input the image-preprocessed human face detection frame to a pre-trained dangerous driving behavior recognition model. In an embodiment, the electronic device may first perform enlargement processing on the human face detection frame, and obtain an enlargement-processed human face detection frame; then perform clipping processing on the enlargement-processed human face detection frame, and obtain a clipping-processed human face detection frame; and finally perform normalization processing on the clipping-processed human face detection frame and obtain a normalization-processed human face detection frame, and configure the normalization-processed human face detection frame as the image-preprocessed human face detection frame.

In step S203, the image-preprocessed human face detection frame is input to a pre-trained dangerous driving behavior recognition model, dangerous driving behavior recognition is performed on the image-preprocessed human face detection frame through the pre-trained dangerous driving behavior recognition model, and a dangerous driving behavior recognition result corresponding to the human face detection frame is obtained.

In a specific embodiment of the present disclosure, the electronic device may input the image-preprocessed human face detection frame to a pre-trained dangerous driving behavior recognition model, perform dangerous driving behavior recognition on the image-preprocessed human face detection frame through the pre-trained dangerous driving behavior recognition model, and obtain a dangerous driving behavior recognition result corresponding to the human face detection frame. In an embodiment, the electronic device may first input the preprocessed human face detection frame to a convolutional layer in the pre-trained dangerous driving behavior recognition model, perform, through the convolutional layer, a convolution operation on the preprocessed human face detection frame, and obtain a human face feature extraction result corresponding to the convolutional layer; then input the human face feature extraction result corresponding to the convolutional layer to a pooling layer in the pre-trained dangerous driving behavior recognition model, perform, through the pooling layer, a pooling operation on the human face detection frame corresponding to the convolutional layer, and obtain a human face feature extraction result corresponding to the pooling layer; and finally input the human face feature extraction result corresponding to the pooling layer to a fully connected layer in the pre-trained dangerous driving behavior recognition model, perform, through the fully connected layer, a classification operation on the human face feature extraction result corresponding to the pooling layer, and obtain the dangerous driving behavior recognition result corresponding to the human face detection frame. According to the method for recognizing a dangerous driving behavior provided by the embodiment of the present disclosure, a to-be-recognized image is input to a pre-trained human face detection model, human face detection is performed on the to-be-recognized image through the pre-trained human face detection model, and a human face detection frame of the to-be-recognized image is obtained; and the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained. That is to say, in the present disclosure, a human face detection frame may be first extracted from a to-be-recognized image, and then dangerous driving behavior recognition is performed based on the human face detection frame. In the related method for recognizing a dangerous driving behavior, a to-be-recognized image is directly recognized based on CNNs. In the present disclosure, the technical means is adopted that a human face detection frame is first extracted from a to-be-recognized image and then dangerous driving behavior recognition is performed based on the human face detection frame, so that the technical problem is solved that in the related art, a to-be-recognized image is directly recognized based on CNNs, however, target actions such as smoking, phoning and drinking have relatively small movement ranges in images, and thus scarce features can be extracted; meanwhile, a lot of interference information around exits, resulting in relatively low recognition accuracy in real vehicle scenes and not-ideal recognition effect. According to the technical solution of the present disclosure, the accuracy of recognizing a dangerous driving behavior of a driver may be greatly improved, at the same time the calculation cost may be greatly reduced, and a capability of recognizing a dangerous driving behavior with high accuracy and in real time is obtained.

Moreover, the technical solution of the embodiment of the present disclosure is simple and convenient to implement, easy to popularize, and has a wider application range.

### Embodiment three

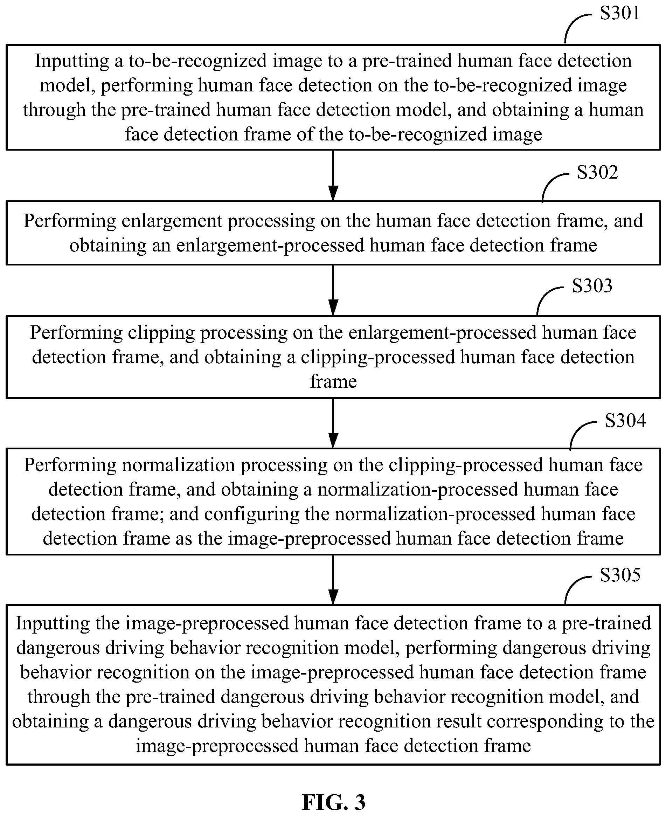

FIG. 3 is a flowchart of a method for recognizing a dangerous driving behavior according to embodiment three of the present disclosure. As shown in FIG. 3, the method for recognizing a dangerous driving behavior may include steps described below.

In step S301, a to-be-recognized image is input to a pre-trained human face detection model, human face detection is performed on the to-be-recognized image through the pre-trained human face detection model, and a human face detection frame of the to-be-recognized image is obtained. In step S302, enlargement processing is performed on the human face detection frame, and an enlargement-processed human face detection frame is obtained.

In a specific embodiment of the present disclosure, an electronic device may perform enlargement processing on the human face detection frame, and obtain an enlargement-processed human face detection frame. In this step, the electronic device may double the human face detection frame. In computer image processing and computer graphics, image scaling refers to the process of adjusting the size of digital images. Image scaling requires a trade-off between processing efficiency and the smoothness and sharpness of the result. When the size of an image increases, the visibility of pixels composing the image will become higher, making the image appear "soft". Conversely, shrinking an image will enhance the smoothness and sharpness of the image. Specifically, enlarging an image, also referred to as upsampling or image interpolating, is mainly to enlarge an original image so that the image can be displayed on a display device having higher resolution.

In step S303, clipping processing is performed on the enlargement-processed human face detection frame, and a clipping-processed human face detection frame is obtained.

In a specific embodiment of the present disclosure, the electronic device may perform clipping processing on the enlargement-processed human face detection frame, and obtain a clipping-processed human face detection frame. In this step, the electronic device may transform the clipped human face detection frame into an image of a predetermined size, for example, transform the clipped human face detection frame into an image having a dimension of 140x 140.

In step S304, normalization processing is performed on the clipping-processed human face detection frame, and a normalization-processed human face detection frame is obtained; and the normalization-processed human face detection frame is configured as the image-preprocessed human face detection frame.

In a specific embodiment of the present disclosure, the electronic device may perform normalization processing on the clipping-processed human face detection frame, and obtain a normalization-processed human face detection frame; and configure the normalization-processed human face detection frame as the image-preprocessed human face detection frame. In this step, the pixel value of each pixel in the normalization-processed human face detection frame is within a predetermined range, for example, the pixel value of each pixel is within [-0.5, 0.5]. Image normalization refers to the process of performing a series of standard processing transformations on an image to transform the image into a fixed standard form. The standard image is referred to as a normalized image. Image normalization is to transform a to-be-processed original image into a corresponding unique standard form through a series of transformations (that is, using invariant moments of an image to find a set of parameters to eliminate the impact of other transformation functions on the transformation of the image). The image of the standard form has invariant properties to affine transformations such as translation, rotation and scaling.

In step S305, the image-preprocessed human face detection frame is input to a pre-trained dangerous driving behavior recognition model, dangerous driving behavior recognition is performed on the image-preprocessed human face detection frame through the pre-trained dangerous driving behavior recognition model, and a dangerous driving behavior recognition result corresponding to the image-preprocessed human face detection frame is obtained. Preferably, in a specific embodiment of the present disclosure, before inputting the to-be-recognized image to the pre-trained human face detection model, the electronic device may further train a human face detection model. Specifically, the electronic device may first configure a first pre-acquired human face image sample as a current human face image sample; in response to the human face detection model not satisfying a preset convergence condition corresponding to the human face detection model, input the current human face image sample to the human face detection model, and train the human face detection model by using the current human face image sample; and configure a next human face image sample of the current human face image sample as the current human face image sample, and repeat the above operations until the human face detection model satisfies the preset convergence condition corresponding to the human face detection model.

Preferably, in a specific embodiment of the present disclosure, before inputting the human face detection frame to the pre-trained dangerous driving behavior recognition model, the electronic device may further train a dangerous driving behavior recognition model. Specifically, the electronic device may first configure a first pre-acquired human face detection frame sample as a current human face detection frame sample; in response to the dangerous driving behavior recognition model not satisfying a preset convergence condition corresponding to the dangerous driving behavior recognition model, input the current human face detection frame sample to the dangerous driving behavior recognition model, and train the dangerous driving behavior recognition model by using the current human face detection frame sample; and configure a next human face detection frame sample of the current human face detection frame sample as the current human face detection frame sample, and repeat the above operations until the dangerous driving behavior recognition model satisfies the preset convergence condition corresponding to the dangerous driving behavior recognition model.

According to the method for recognizing a dangerous driving behavior provided by the embodiment of the present disclosure, a to-be-recognized image is input to a pre-trained human face detection model, human face detection is performed on the to-be-recognized image through the pre-trained human face detection model, and a human face detection frame of the to-be-recognized image is obtained; and the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained. That is to say, in the present disclosure, a human face detection frame may be first extracted from a to-be-recognized image, and then dangerous driving behavior recognition is performed based on the human face detection frame. In the related method for recognizing a dangerous driving behavior, a to-be-recognized image is directly recognized based on CNNs. In the present disclosure, the technical means is adopted that a human face detection frame is first extracted from a to-be-recognized image and then dangerous driving behavior recognition is performed based on the human face detection frame, so that the technical problem is solved that in the related art, a to-be-recognized image is directly recognized based on CNNs, however, target actions such as smoking, phoning and drinking have relatively small movement ranges in images, and thus sparse features may be extracted; meanwhile, a lot of interference information exits around the features, resulting in relatively low recognition accuracy in real vehicle scenes and not-ideal recognition effect. According to the technical solution of the present disclosure, the accuracy of recognizing a dangerous driving behavior of a driver may be greatly improved, at the same time the calculation cost may be greatly reduced, and a capability of recognizing a dangerous driving behavior with high accuracy and in real time is obtained. Moreover, the technical solution of the embodiment of the present disclosure is simple and convenient to implement, easy to popularize, and has a wider application range.

### Embodiment four

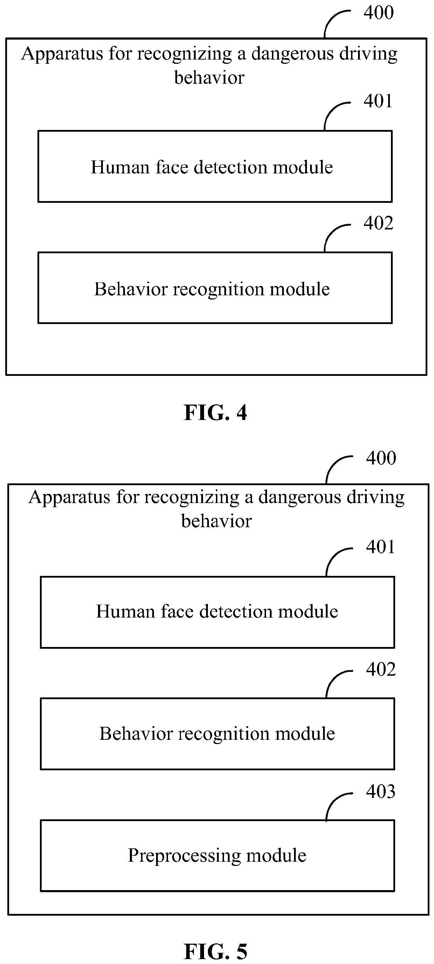

FIG. 4 is a first structural diagram of an apparatus for recognizing a dangerous driving behavior according to embodiment four of the present disclosure. As shown in FIG. 4, the apparatus 400 includes: a human face detection module 401 and a behavior recognition module 402.

The human face detection module 401 is configured to input a to-be-recognized image to a pre-trained human face detection model, perform, through the pre-trained human face detection model, human face detection on the to-be-recognized image, and obtain a human face detection frame of the to-be-recognized image.

The behavior recognition module 402 is configured to input the human face detection frame to a pre-trained dangerous driving behavior recognition model, perform, through the pre-trained dangerous driving behavior recognition model, dangerous driving behavior recognition on the human face detection frame, and obtain a dangerous driving behavior recognition result corresponding to the human face detection frame.

FIG. 5 is a second structural diagram of an apparatus for recognizing a dangerous driving behavior according to embodiment four of the present disclosure. As shown in FIG. 5, the apparatus 400 further includes: a preprocessing module 403, which is configured to perform image preprocessing on the human face detection frame, and obtain an image-preprocessed human face detection frame; and input the image-preprocessed human face detection frame to the pre-trained dangerous driving behavior recognition model.

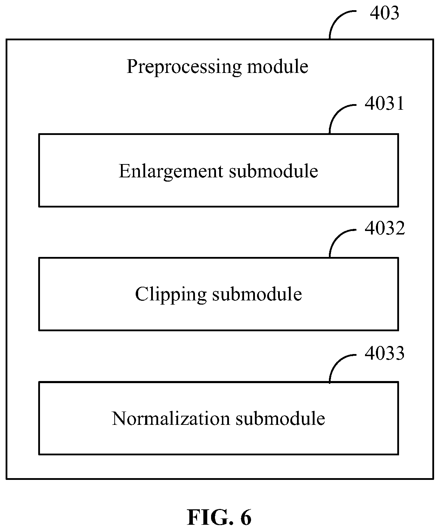

FIG. 6 is a structural diagram of a preprocessing module according to embodiment four of the present disclosure. As shown in FIG. 6, the preprocessing module 403 includes: an enlargement submodule 4031, a clipping submodule 4032 and a normalization submodule 4033.

The enlargement submodule 4031 is configured to perform enlargement processing on the human face detection frame, and obtain an enlargement-processed human face detection frame.

The clipping submodule 4032 is configured to perform clipping processing on the enlargement-processed human face detection frame, and obtain a clipping-processed human face detection frame.

The normalization module 4033 is configured to perform normalization processing on the clipping-processed human face detection frame, and obtain a normalization-processed human face detection frame; and configure the normalization-processed human face detection frame as the image-preprocessed human face detection frame.

Further, the human face detection module 401 is specifically configured to configure a first layer of convolutional neural network of the pre-trained human face detection model as a current layer of convolutional neural network, and configure the to-be-recognized image as a detection object of the current layer of convolutional neural network; perform, through the current layer of convolutional neural network, image downsampling on the detection object of the current layer of convolutional neural network, and obtain a human face feature extraction result corresponding to the current layer of convolutional neural network; configure the human face feature extraction result corresponding to the current layer of convolutional neural network as a detection object of a next layer of convolutional neural network of the current layer of convolutional neural network; configure the next layer of convolutional neural network as the current layer of convolutional neural network, and repeat the above operations until a human face feature extraction result corresponding to an N-th layer of convolutional neural network is extracted from a detection object of the N-th layer of convolutional neural network of the pre-trained human face detection model, where N is a natural number greater than 1; and obtain, according to human face feature extraction results corresponding to each layer of convolutional neural network among the first layer of convolutional neural network to the N-th layer of convolutional neural network, the human face detection frame of the to-be-recognized image.

Further, the behavior recognition module 402 is specifically configured to input the human face detection frame to a convolutional layer in the pre-trained dangerous driving behavior recognition model, perform, through the convolutional layer, a convolution operation on the human face detection frame, and obtain a human face feature extraction result corresponding to the convolutional layer; input the human face feature extraction result corresponding to the convolutional layer to a pooling layer in the pre-trained dangerous driving behavior recognition model, perform, through the pooling layer, a pooling operation on the human face detection frame corresponding to the convolutional layer, and obtain a human face feature extraction result corresponding to the pooling layer; and input the human face feature extraction result corresponding to the pooling layer to a fully connected layer in the pre-trained dangerous driving behavior recognition model, perform, through the fully connected layer, a classification operation on the human face feature extraction result corresponding to the pooling layer, and obtain the dangerous driving behavior recognition result corresponding to the human face detection frame. Further, the apparatus further includes: a human face detection training module 404 (not shown in figures), which is configured to configure a first pre-acquired human face image sample as a current human face image sample; in response to a human face detection model not satisfying a preset convergence condition corresponding to the human face detection model, input the current human face image sample to the human face detection model, and train the human face detection model by using the current human face image sample; and configure a next human face image sample of the current human face image sample as the current human face image sample, and repeat the above operations until the human face detection model satisfies the preset convergence condition corresponding to the human face detection model.

Further, the apparatus further includes: a behavior recognition training module 405 (not shown in figures), which is configured to configure a first pre-acquired human face detection frame sample as a current human face detection frame sample; in response to a dangerous driving behavior recognition model not satisfying a preset convergence condition corresponding to the dangerous driving behavior recognition model, input the current human face detection frame sample to the dangerous driving behavior recognition model, and train the dangerous driving behavior recognition model by using the current human face detection frame sample; and configure a next human face detection frame sample of the current human face detection frame sample as the current human face detection frame sample, and repeat the above operations until the dangerous driving behavior recognition model satisfies the preset convergence condition corresponding to the dangerous driving behavior recognition model.

The above apparatus for recognizing a dangerous driving behavior of a verification processor can execute the method provided by any embodiment of the present disclosure, and has functional modules and beneficial effects corresponding to the executed method. For technical details not described in detail in the embodiment, reference may be made to the method for recognizing a dangerous driving behavior of a verification processor provided in any embodiment of the present disclosure.

### Embodiment five

According to an embodiment of the present disclosure, the present application further provides an electronic device and a readable storage medium.

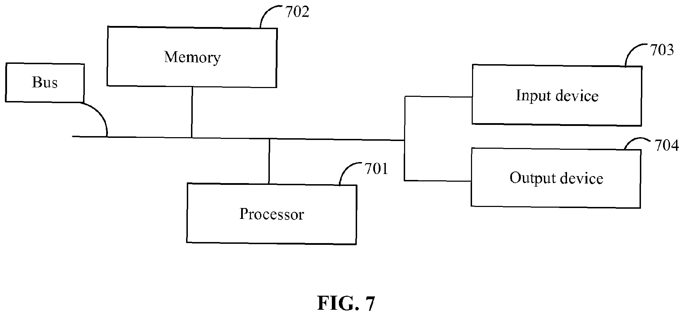

FIG. 7 is a block diagram of an electronic device for implementing a method for recognizing a dangerous driving behavior according to an embodiment of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile apparatuses, for example, personal digital assistants, cellphones, smartphones, wearable devices and other similar computing apparatuses. Herein the shown components, the connections and relationships between these components, and the functions of these components are illustrative only and are not intended to limit the implementation of the present disclosure as described and/or claimed herein.

As shown in FIG. 7, the electronic device includes one or more processors 701, a memory 702, and interfaces for connecting various components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output apparatus (for example, a display device coupled to an interface). In other embodiments, if required, multiple processors and/or multiple buses may be used with multiple memories. Similarly, multiple electronic devices may be connected, each providing some necessary operations (for example, a server array, a set of blade servers or a multi-processor system). FIG. 7 shows one processor 701 by way of example.

The memory 702 is the non-transitory computer-readable storage medium provided in the present disclosure. The memory stores instructions executable by at least one processor to cause the at least one processor to execute the method for recognizing a dangerous driving behavior provided in the present disclosure. The non-transitory computer-readable storage medium of the present disclosure stores computer instructions for causing a computer to execute the method for recognizing a dangerous driving behavior provided in the present disclosure.

The memory 702 as a non-transitory computer-readable storage medium is configured to store non-transitory software programs, non-transitory computer-executable programs and modules, for example, program instructions/modules (for example, the human face detection module 401 and the behavior recognition module 402 shown in FIG. 4) corresponding to the method for recognizing a dangerous driving behavior according to the embodiments of the present disclosure. The processor 701 executes non-transitory software programs, instructions and modules stored in the memory 702 to execute various function applications and data processing of a server, that is, implement the method for recognizing a dangerous driving behavior in the preceding method embodiments.

The memory 702 may include a program storage region and a data storage region. The program storage region may store an operating system and an application program required for at least one function. The data storage region may store data created based on the use of the electronic device for performing the method for recognizing a dangerous driving behavior. Additionally, the memory 502 may include a high-speed random-access memory and a non-transitory memory, for example, at least one disk memory, a flash memory or another non-transitory solid-state memory. In some embodiments, the memory 702 optionally includes memories disposed remote from the processor 701, and these remote memories may be connected, through a network, to the electronic device for performing the method for recognizing a dangerous driving behavior. Examples of the preceding networks include, but are not limited to, the Internet, an intranet, a local area network, a mobile communication network and a combination thereof.

The electronic device for performing the method for recognizing a dangerous driving behavior may further include an input device 703 and an output device 704. The processor 701, the memory 702, the input device 703 and the output device 704 may be connected by a bus or in other manners. FIG. 7 uses connection by a bus as an example.

The input device 703 can receive input number or character information and generate key signal input related to user settings and function control of the electronic device for performing the method for recognizing a dangerous driving behavior. The input device 703 may be, for example, a touchscreen, a keypad, a mouse, a trackpad, a touchpad, a pointing stick, one or more mouse buttons, a trackball or a joystick. The output device 704 may be, for example, a display device, an auxiliary lighting device (for example, a light-emitting diode (LED)) or a haptic feedback device (for example, a vibration motor). The display device may include, but is not limited to, a liquid-crystal display (LCD), a light-emitting diode (LED) display or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used for providing machine instructions and/or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input). The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), the Internet and a blockchain network.

The computing system may include clients and servers. A client and a server are generally remote from each other and typically interact through a communication network. The relationship between the client and the server arises by virtue of computer programs running on the respective computers and having a client-server relationship to each other.

According to the technical solution of the embodiments of the present disclosure, a to-be-recognized image is first input to a pre-trained human face detection model, human face detection is performed on the to-be-recognized image through the pre-trained human face detection model, and a human face detection frame of the to-be-recognized image is obtained; and then the human face detection frame is input to a pre-trained dangerous driving behavior recognition model, dangerous driving behavior recognition is performed on the human face detection frame through the pre-trained dangerous driving behavior recognition model, and a dangerous driving behavior recognition result corresponding to the human face detection frame is obtained. That is to say, in the present disclosure, a human face detection frame may be first extracted from a to-be-recognized image, and then dangerous driving behavior recognition is performed based on the human face detection frame. In the related method for recognizing a dangerous driving behavior, a to-be-recognized image is directly recognized based on CNNs. In the present disclosure, the technical means is adopted that a human face detection frame is first extracted from a to-be-recognized image and then dangerous driving behavior recognition is performed based on the human face detection frame, so that the technical problem is solved that in the related art, a to-be-recognized image is directly recognized based on CNNs, however, target actions such as smoking, phoning and drinking have relatively small movement ranges in images, and thus sparse features can be extracted; meanwhile, a lot of interference information exits around the features, resulting in relatively low recognition accuracy in real vehicle scenes and not-ideal recognition effect. According to the technical solution of the present disclosure, the accuracy of recognizing a dangerous driving behavior of a driver may be greatly improved, at the same time the calculation cost may be greatly reduced, and a capability of recognizing a dangerous driving behavior with high accuracy and in real time is obtained. Moreover, the technical solution of the embodiment of the present disclosure is simple and convenient to implement, easy to popularize, and has a wider application range.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, sub-combinations and substitutions may be made depending on design requirements and other factors. Any modifications, equivalent substitutions, improvements and the like made within the spirit and principle of the present disclosure are within the scope of the present disclosure.

## Claims

1. A method for recognizing a dangerous driving behavior, comprising:
inputting a to-be-recognized image to a pre-trained human face detection model, performing, through the pre-trained human face detection model, human face detection on the to-be-recognized image, and obtaining a human face detection frame of the to-be-recognized image; and
inputting the human face detection frame to a pre-trained dangerous driving behavior recognition model, performing, through the pre-trained dangerous driving behavior recognition model, dangerous driving behavior recognition on the human face detection frame, and obtaining a dangerous driving behavior recognition result corresponding to the human face detection frame.

2. The method according to claim 1, wherein before the inputting the human face detection frame to the pre-trained dangerous driving behavior recognition model, the method further comprises:
performing image preprocessing on the human face detection frame, and obtaining an image-preprocessed human face detection frame; and
inputting the image-preprocessed human face detection frame to the pre-trained dangerous driving behavior recognition model.

3. The method according to claim 2, wherein the performing the image preprocessing on the human face detection frame, and obtaining the image-preprocessed human face detection frame comprises:
performing enlargement processing on the human face detection frame, and obtaining an enlargement-processed human face detection frame;
performing clipping processing on the enlargement-processed human face detection frame, and obtaining a clipping-processed human face detection frame; and
performing normalization processing on the clipping-processed human face detection frame, and obtaining a normalization-processed human face detection frame; and configuring the normalization-processed human face detection frame as the image-preprocessed human face detection frame.

4. The method according to claim 1, wherein the performing, through the pre-trained human face detection model, the human face detection on the to-be-recognized image, and obtaining the human face detection frame of the to-be-recognized image comprises:
configuring a first layer of convolutional neural network of the pre-trained human face detection model as a current layer of convolutional neural network; and configuring the to-be-recognized image as a detection object of the current layer of convolutional neural network;
performing, through the current layer of convolutional neural network, image downsampling on the detection object of the current layer of convolutional neural network, and obtaining a human face feature extraction result corresponding to the current layer of convolutional neural network; configuring the human face feature extraction result corresponding to the current layer of convolutional neural network as a detection object of a next layer of convolutional neural network of the current layer of convolutional neural network; and configuring the next layer of convolutional neural network as the current layer of convolutional neural network, and repeating the above operations until a human face feature extraction result corresponding to an N-th layer of convolutional neural network is extracted from a detection object of the N-th layer of convolutional neural network of the pre-trained human face detection model, wherein N is a natural number greater than 1; and
obtaining, according to human face feature extraction results corresponding to each layer of convolutional neural network among the first layer of convolutional neural network to the N-th layer of convolutional neural network, the human face detection frame of the to-be-recognized image.

5. The method according to claim 1, wherein the inputting the human face detection frame to the pre-trained dangerous driving behavior recognition model, performing, through the pre-trained dangerous driving behavior recognition model, the dangerous driving behavior recognition on the human face detection frame, and obtaining the dangerous driving behavior recognition result corresponding to the human face detection frame comprises:
inputting the human face detection frame to a convolutional layer in the pre-trained dangerous driving behavior recognition model, performing, through the convolutional layer, a convolution operation on the human face detection frame, and obtaining a human face feature extraction result corresponding to the convolutional layer;
inputting the human face feature extraction result corresponding to the convolutional layer to a pooling layer in the pre-trained dangerous driving behavior recognition model, performing, through the pooling layer, a pooling operation on the human face detection frame corresponding to the convolutional layer, and obtaining a human face feature extraction result corresponding to the pooling layer; and
inputting the human face feature extraction result corresponding to the pooling layer to a fully connected layer in the pre-trained dangerous driving behavior recognition model, performing, through the fully connected layer, a classification operation on the human face feature extraction result corresponding to the pooling layer, and obtaining the dangerous driving behavior recognition result corresponding to the human face detection frame.

6. The method according to claim 1, wherein before the inputting the to-be-recognized image to the pre-trained human face detection model, the method further comprises:
configuring a first pre-acquired human face image sample as a current human face image sample; and
in response to a human face detection model not satisfying a preset convergence condition corresponding to the human face detection model, inputting the current human face image sample to the human face detection model, and training the human face detection model by using the current human face image sample; and configuring a next human face image sample of the current human face image sample as the current human face image sample, and repeating the above operations until the human face detection model satisfies the preset convergence condition corresponding to the human face detection model.

7. The method according to claim 1, wherein before the inputting the human face detection frame to the pre-trained dangerous driving behavior recognition model, the method further comprises:
configuring a first pre-acquired human face detection frame sample as a current human face detection frame sample; and
in response to a dangerous driving behavior recognition model not satisfying a preset convergence condition corresponding to the dangerous driving behavior recognition model, inputting the current human face detection frame sample to the dangerous driving behavior recognition model, and training the dangerous driving behavior recognition model by using the current human face detection frame sample; and configuring a next human face detection frame sample of the current human face detection frame sample as the current human face detection frame sample, and repeating the above operations until the dangerous driving behavior recognition model satisfies the preset convergence condition corresponding to the dangerous driving behavior recognition model.

8. An apparatus for recognizing a dangerous driving behavior, comprising: a human face detection module and a behavior recognition module, wherein
the human face detection module is configured to input a to-be-recognized image to a pre-trained human face detection model, perform, through the pre-trained human face detection model, human face detection on the to-be-recognized image, and obtain a human face detection frame of the to-be-recognized image; and
the behavior recognition module is configured to input the human face detection frame to a pre-trained dangerous driving behavior recognition model, perform, through the pre-trained dangerous driving behavior recognition model, dangerous driving behavior recognition on the human face detection frame, and obtain a dangerous driving behavior recognition result corresponding to the human face detection frame.

9. The apparatus according to claim 8, further comprising a preprocessing module, which is configured to perform image preprocessing on the human face detection frame, and obtain an image-preprocessed human face detection frame; and input the image-preprocessed human face detection frame to the pre-trained dangerous driving behavior recognition model.

10. The apparatus according to claim 9, wherein the preprocessing module comprises: an enlargement submodule, a clipping submodule and a normalization submodule, wherein
the enlargement submodule is configured to perform enlargement processing on the human face detection frame, and obtain an enlargement-processed human face detection frame;
the clipping submodule is configured to perform clipping processing on the enlargement-processed human face detection frame, and obtain a clipping-processed human face detection frame; and
the normalization module is configured to perform normalization processing on the clipping-processed human face detection frame, and obtain a normalization-processed human face detection frame; and configure the normalization-processed human face detection frame as the image-preprocessed human face detection frame.

11. The apparatus according to claim 8, wherein
the human face detection module is configured to configure a first layer of convolutional neural network of the pre-trained human face detection model as a current layer of convolutional neural network; and configure the to-be-recognized image as a detection object of the current layer of convolutional neural network;
perform, through the current layer of convolutional neural network, image downsampling on the detection object of the current layer of convolutional neural network, and obtain a human face feature extraction result corresponding to the current layer of convolutional neural network; configure the human face feature extraction result corresponding to the current layer of convolutional neural network as a detection object of a next layer of convolutional neural network of the current layer of convolutional neural network; and configure the next layer of convolutional neural network as the current layer of convolutional neural network, and repeat the above operations until a human face feature extraction result corresponding to an N-th layer of convolutional neural network is extracted from a detection object of the N-th layer of convolutional neural network of the pre-trained human face detection model, wherein N is a natural number greater than 1; and
obtain, according to human face feature extraction results corresponding to each layer of convolutional neural network among the first layer of convolutional neural network to the N-th layer of convolutional neural network, the human face detection frame of the to-be-recognized image.

12. The apparatus according to claim 8, wherein
the behavior recognition module is configured to input the human face detection frame to a convolutional layer in the pre-trained dangerous driving behavior recognition model, perform, through the convolutional layer, a convolution operation on the human face detection frame, and obtain a human face feature extraction result corresponding to the convolutional layer; input the human face feature extraction result corresponding to the convolutional layer to a pooling layer in the pre-trained dangerous driving behavior recognition model, perform, through the pooling layer, a pooling operation on the human face detection frame corresponding to the convolutional layer, and obtain a human face feature extraction result corresponding to the pooling layer; and input the human face feature extraction result corresponding to the pooling layer to a fully connected layer in the pre-trained dangerous driving behavior recognition model, perform, through the fully connected layer, a classification operation on the human face feature extraction result corresponding to the pooling layer, and obtain the dangerous driving behavior recognition result corresponding to the human face detection frame.

13. The apparatus according to claim 8, further comprising a human face detection training module, which is configured to configure a first pre-acquired human face image sample as a current human face image sample; in response to a human face detection model not satisfying a preset convergence condition corresponding to the human face detection model, input the current human face image sample to the human face detection model, and train the human face detection model by using the current human face image sample; and configure a next human face image sample of the current human face image sample as the current human face image sample, and repeat the above operations until the human face detection model satisfies the preset convergence condition corresponding to the human face detection model.

14. The apparatus according to claim 8, further comprising: a behavior recognition training module, which is configured to configure a first pre-acquired human face detection frame sample as a current human face detection frame sample; in response to a dangerous driving behavior recognition model not satisfying a preset convergence condition corresponding to the dangerous driving behavior recognition model, input the current human face detection frame sample to the dangerous driving behavior recognition model, and train the dangerous driving behavior recognition model by using the current human face detection frame sample; and configure a next human face detection frame sample of the current human face detection frame sample as the current human face detection frame sample, and repeat the above operations until the dangerous driving behavior recognition model satisfies the preset convergence condition corresponding to the dangerous driving behavior recognition model.

15. An electronic device, comprising:
at least one processor; and
a memory communicatively connected to the at least one processor; wherein
the memory stores instructions executable by the at least one processor, and the instructions are executed by the at least one processor to cause the at least one processor to perform the method of any one of claims 1 to 7.

16. A non-transitory computer-readable storage medium storing computer instructions for causing a computer to perform the method of any one of claims 1 to 7.
